# EUROPEAN PATENT APPLICATION

(11) **EP 2 520 948 A2**
(43) Date of publication of application: **07.11.2012**
(21) Application number: 12166281.1
(22) Date of filing: 01.05.2012
(51) Int. Cl.: G01S 13/82, G01S 13/87, G01C 21/00

(54) **RFID based guidance in remote locations**

(30) Priority: 04.05.2011 US 201113100505
(71) Applicant: General Electric Company, Schenectady, NY 12345 (US)
(72) Inventor: Sheikman, Boris Leonid, Minden, NV 89423 (US); Hatch, Charles Terrance, Gardnerville, NV 89410 (US); Whitefield II, Charles David, Carson City, NV 89703 (US)
(74) Representative: Picker, Madeline Margaret

(57) **Abstract**

A guidance location system and an associated method for locating and guiding a user within an area is provided. The system includes a radio frequency identification (RFID) reader device configured to send at least one query signal and receive at least one response signal. The system includes at least one RFID tag positioned within an area. The at least one RFID tag stores unique information associated with a location of the at least one RFID tag within the area. Each of the at least one RFID tag is configured to receive the least one query signal from the RFID reader device and to transmit one of the at least one response signal, conveying the unique information, to the RFID reader device. The RFID reader device is further configured to utilize the at least one response signal to determine a current location of the RFID reader device within the area.

## Description

### BACKGROUND OF THE INVENTION

The invention relates to a real time location system using radio frequency identification (RFID) tags and, more particularly, to one or more RFID tags that communicate with an RFID reader device to alert a user to his/her location within an area and guide the user to a desired destination within the area.

Global Positioning Systems (GPS) is a space-based navigation system. Within the GPS system, a plurality of satellites transmit signals that can be received at a receiver device (e.g., a dedicated GPS receiver, cell phone, etc.). The GPS receiver unit determines a position utilizing the received signals. It is even possible that the receiver device can then transmit another signal that conveys the determined location of the receiver device. Thus, a user of a receiver device is informed of his/her position and possibly the position information can be shared with another, such as a centralized server, or the like. However, certain areas, in particular, large areas, may inhibit/prevent reception of GPS signals from the satellites. Some example areas that inhibit/prevent reception include areas located underground or within buildings with relatively thick walls. Thus, a method and device for determining a user's location within an area without the use of GPS would be beneficial. Further, it would be useful to have a device that displays the user's current location within the area and guides the user to a desired location, such as an exit. This would be desirable for emergency situations, such as power outages or fires, when visibility is relatively low or non-existent.

### BRIEF DESCRIPTION OF THE INVENTION

The following text presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

In accordance with one aspect, the present invention provides a location system. The system includes a radio frequency identification (RFID) reader device configured to send at least one query signal and receive at least one response signal. The system includes at least one RFID tag positioned within an area. The at least one RFID tag stores unique information associated with a location of the at least one RFID tag within the area. Each of the at least one RFID tag is configured to receive the least one query signal from the RFID reader device and to transmit one of the at least one response signal, conveying the unique information, to the RFID reader device. The RFID reader device is further configured to utilize the at least one response signal to determine a current location of the RFID reader device within the area.

In accordance with another aspect, the present invention provides a method of locating a user within an area. A radio frequency identification (RFID) reader device is provided. At least one RFID tag is positioned within the area. The at least one RFID tag is configured to store unique information associated with a location of the at least one RFID tag within the area. At least one signal is sent from the RFID reader device and is received by the at least one RFID tag. The stored unique information of at least one RFID tag is transmitted to the RFID reader device. A current location of the RFID reader device is determined within the area.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 is a schematic view of an example area and an example guidance location system in accordance within an aspect of the present invention;
FIG. 2 is a block diagram of an example RFID reader device and an example RFID tag of the system shown within FIG. 1 and in accordance within an aspect of the present invention;
FIG. 3 is a schematic view of an example display screen of the RFID reader device displaying a path within the area shown with Fig. 1; and
FIG. 4 is a schematic view of another example display screen of the RFID reader device displaying a path that avoids a dangerous situation.

### DETAILED DESCRIPTION OF EMBODIMENTS OF THE INVENTION

Example embodiments that incorporate one or more aspects of the invention are described and illustrated in the drawings. These illustrated examples are not intended to be a limitation on the invention. For example, one or more aspects of the invention can be utilized in other embodiments and even other types of devices. Moreover, certain terminology is used herein for convenience only and is not to be taken as a limitation on the invention. Still further, in the drawings, the same reference numerals are employed for designating the same elements.

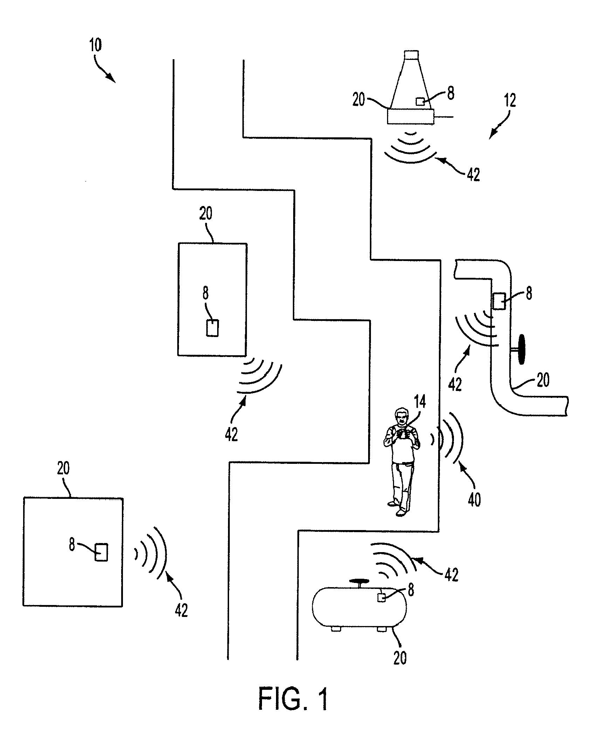

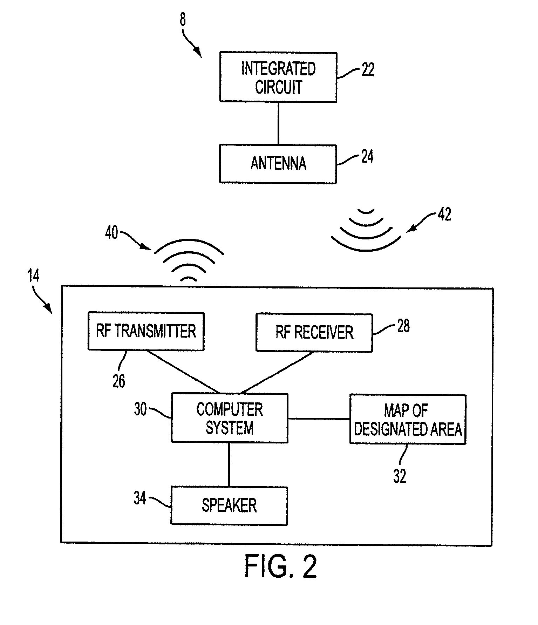

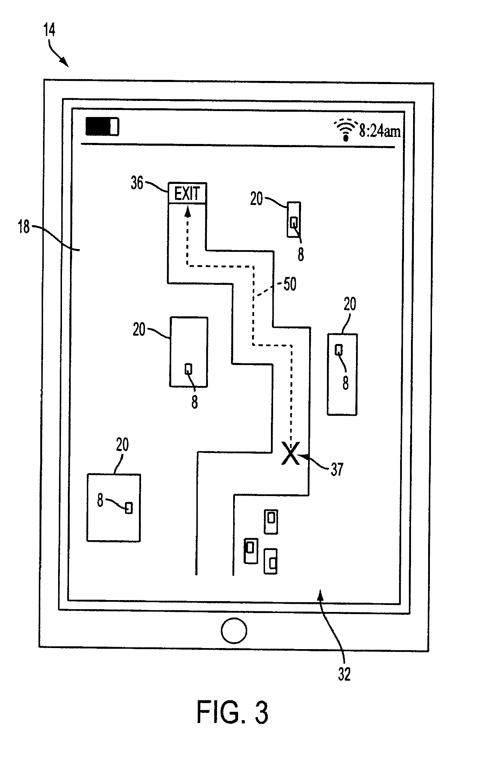

FIG. 1 illustrates an example guidance location system 10 according to an aspect of the invention. The guidance location system 10 can be positioned within an area 12. The guidance location system 10 can include one or more radio frequency identification (RFID) tags 8 positioned within the area 12. A user can carry (e.g., hold or otherwise secured upon the user) an RFID reader device 14 within the area 12. In general, the RFID tags 8 can cooperate (e.g., see FIG. 2) with the RFID reader device 14 via communication of information from the RFID tags 8 to the RFID reader device 14 and, thus enable the RFID reader device 14 to determine a current location of the RFID reader device 14 within the area 12. The RFID reader device 14 can subsequently display the current location within the area 12 on a display screen (e.g., see FIG. 3) for the user.

The area 12 (FIG. 1) can include a variety of structures 20 positioned throughout the area 12. For instance, the structures 20 can include pipes, water tanks, walls, doorways, hallways, exits, etc., such as shown in FIG. 1. It is to be appreciated that the shown area 12 is only an example and is only generically/schematically shown in FIG. 1. The structures 20 are not limited in number or location to the shown example, and could be varied in number and/or location within the area 12. Also, it is to be appreciated that the type of area could be varied and the types of structures located therein could be varied. Some example area locations include environments such as factories, steel mills, hydro plants, mines, etc. For instance, in one example, the area 12 could be in a steel mill and the area could include a blast furnace as a structure, or the area could be in a mine and the area could include various mine shaft features, etc. as structures. The area 12 could further be in an offshore oil platform, wind turbine installation, or the like. In view of the fact that the area 12 can be varied, it is to be appreciated that the attributes of the area 12 could be varied. For example, the area 12 can include locations that have access to a Global Positioning System (GPS) and locations that have limited or no access to GPS. Some specific examples of locations that have limited or no access to GPS can include locations that are underground and/or underwater, such as mines, tunnels, or the like, and locations with thick walls/ceilings, such as power plants, hydro plant dams, etc.

Referring still to FIG. 1, the guidance location system 10 can include the one or more RFID tags 8 positioned throughout the area 12. The RFID tags 8 can be positioned in a variety of locations within the area 12. For instance, the RFID tags 8 can be positioned on fixed structures 20 within the area 12, including pipes, walls, doorways, hallways, exits, etc. of the shown example. Moreover, the RFID tags 8 can be positioned in a broad range of locations throughout the area 12, such that the RFID tags 8 cover most or all of the area 12. The RFID tags 8 are not limited to fixed structures, and, as such, can be positioned to mobile structures that can move inside or outside the area 12. For instance, the RFID tags 8 can be positioned on a variety of devices within the area 12, such as a mobile asset, including as a forklift, truck, automobile, cart, or the like. The RFID tags 8 can be positioned such that the RFID reader device 14 can communicate with one or more of the RFID tags 8 in most or all locations within the area 12.

The RFID tags 8 can be attached to or at least placed proximate to the structures 20. In one example methodology, the RFID tags 8 can be removably affixed to the structures 20 in a number of ways, including by adhesives, snap fit means, or the like. Accordingly, when the RFID tags 8 are positioned on the structures 20, the RFID tags 8 and will remain fixed to the structures 20 unless removed. The RFID tags 8 can take on a number of sizes, and can be small enough to be positioned out of prominent sight, such as within a light fixture, within a ceiling panel, or the like. Moreover, the RFID tags 8 can effectively be used in a variety of environments, including high and low temperature environments, environments with high moisture and humidity, etc.

Referring now to FIG. 2, a single, example RFID tag 8 is schematically shown communicating with the RFID reader device 14 by radio waves to convey information from each respective RFID tag 8 to the RFID reader device 14. It is to be appreciated that although FIG. 2 only shows a single, example RFID tag 8 engaged in communication with the RFID reader device 14, similar communication can occur respectively between each of the plurality of RFID tags 8 (FIG. 1) and the RFID reader device 14. Accordingly, it is to be understood that one or more of the RFID tags 8 can be engaged in the communication. For the communication, the RFID reader device 14 acts as an interrogator to query the RFID tags 8.

Turning to possible physical specifics of the RFID tags 8, it should be appreciated that such specifics need not be limitations upon the scope of the present invention. Some, example physical specifics can include a variety of different types of RFID tags, including passive RFID tags, active RFID tags, and semi-passive RFID tags. Passive RFID tags do not contain a battery since power is supplied by the communication from the RFID reader device 14. Specifically, a passive RFID tag utilizes electromagnetic field properties of the communication from the RFID reader device 14 for power. Active RFID tags include a battery that can be used as the power source for the RFID tag. Semi-passive RFID tags include a battery but also use power supplied by the RFID reader device 14 similar to the passive RFID.

In the shown example of FIG. 2, the RFID tag 8 can include an integrated circuit (IC) 22 that stores and/or processes information. The RFID tag 8 also includes an antenna 24 for both receiving and transmitting signals. In one example, the antenna 24 can transmit stored information from the RFID tag 8. The stored information can be unique to each RFID tag 8 within the area 12. Specifically, the unique information can include a variety of information. For instance, the unique information could include the specific location of the RFID tag 8 within the area 12, such as "RFID tag located on the pipe" (e.g., see FIG. 1). In the alternative, the unique information could include only an identification code/number assigned to the RFID tag, such as "RFID tag #135", or the like. The unique information is utilized by the RFID reader device 14 as described below.

It should be noted again that the RFID tags 8 in the present example are not limited to the RFID tag shown and described with regard to FIG. 2, and can include a variety of types of RFID tags. For instance, within a passive RFID tag the integrated circuit shown in Fig. 2 may simply by a memory, such as EEPROM, which merely delivers information upon the interrogation from the RFID reader device 14. Similarly, within an active RFID tag a battery can be included in addition to the integrated circuit 22 and antenna 24 shown in Fig 2.

Referring still to FIG. 2, the RFID reader device 14 can include an antenna which can includes a radio frequency (RF) transmitter 26 and a RF receiver 28. The RF transmitter 26 can send out one or more signals 40, which can be referred to as a query or "ping" signal. Such a signal 40 can be received by the RFID tag 8. The RF receiver 28 can receive one or more response signals 42 from the RFID tag 8.

The signals 40 and 42 can have a range limitation (i.e., distance over which a signal has sufficient strength and clarity to be viable). As will be appreciated the signal 42 can be received by any of the plural RFID tags 8 (FIG. 1) that are within range and the RF receiver 28 can receive one or more response signals 42 from the plurality of the RFID tags 8 that are within range. As will be described in more detail below, the response signals 42 can be analyzed by the RFID reader device 14 to determine a current location of the RFID reader device 14.

The RF transmitter 26 and the receiver 28 can be controlled by a computer system 30 (FIG. 2), such as a microprocessor, controller, or the like. The computer system 30 can include any type of system, such as a microprocessor, controller, etc. The computer system 30 can further operate upon a map 32 of the area 12. The map 32 may be held in memory or other holding device. The map 32 can be acquired in a number of ways. For instance, the computer system 30 can be preloaded to include the map 32 of the area 12. This could be accomplished by pre-mapping (e.g., predrawing or pre-configuring) the map 32 of the area 12. In the alternative, the computer system 30 can access a database to download the map 32 of the area 12. The map 32 can include a variety of desired locations within the area 12. For instance, the map 32 can display the paths, such as walkways, stairwells, doorways, etc. that exist in the area 12. Furthermore, the map 32 can display any structures, exits out of the area 12, and landmarks, such as the location of the control room, specific structures including machines, sensors, gauges, etc.

The specific locations of each of the RFID tags 8 could be included (e.g., preloaded) into the map 32 in advance. Specifically, a map of the area 12 could be stored that indicates the location of each of the RFID tags 8 along with the unique information of each of the RFID tags 8. As such, the unique information ("RFID tag #135") could be associated with a location of the specific RFID tag within the area 12.

The RFID reader device 14 can further include a speaker 34. The speaker can be in operative association with the computer system 30, such that the computer system 30 can command the speaker 34 to emit sounds, warnings, alerts, words, sentences, etc. As such, the RFID reader device 14 can provide voice instructions/commands through the speaker 34. The voice commands could be used in conjunction with the map 32. For instance, in addition to showing the map 32, the RFID reader device 14 could audibly state where the user is located, such as "next to the blast furnace and behind the steam pipe." Furthermore, the RFID reader device 14 could audibly direct the user along a path and to a desired location by stating commands, such as "walk forward and turn left in 20 meters."

Referring now to FIG. 3, the map 32 can be presented to a user of the RFID reader device 14 via a display screen 18 on the RFID reader device 14. In one example, the computer system 30 can control the display screen 18 as a display output. For example, once the map 32 of the area 12 is preloaded to the computer system 30, memory or the like, the computer system 30 can operate so that a map image is displayed on the screen 18. The map 32 on the display screen 18 can be substantially identical to a layout of the area 12. The display screen 18 can take on a number of sizes and configurations, depending on the specific RFID reader device 14 being used and/or the size of the area 12.

It should be noted that the RFID reader device 14 can be integrated to and/or be a shared arrangement with a variety of other components/devices. For instance, the RFID reader device 14 could include a number of handheld devices, including, but not limited to, a cell phone, a smart phone, a mobile device, an iDevice, a GPS style locator, a wristwatch, etc. Accordingly, the user can use the handheld device, such as a cell phone, as the RFID reader device 14. In these examples, some structures (e.g., the display screen 18) could be commonly shared by multiple functions/features of the integrated/shared arrangement.

Referring now to FIGS. 1 and 2, the operation of the guidance location system 10 can now be described. A user can have the RFID reader device 14 within the area 12. The user may be lost, may need to know his/her current location, and/or may need guidance to a specific location within the area 12, such as the exit. The user can prompt the RFID reader device 14, such as by pressing a button, touching the display screen 18, etc., to send out one or more signals 40. For instance, the user could press a button on the RFID reader device 14 instructing the computer system 30 to cause emittance of one or more of the signals 40 from the RF transmitter 26. The one or more signals 40 can pass through part or all of the area 12 and may be received by some or all of the antennas of the RFID tags 8.

Each of the RFID tags 8 that receive the signal(s) 40 from the RFID reader device 14 can respond by transmitting the respective response signal 42 back to the RFID reader device 14. Specifically, each receiving RFID tag 8 can each respond by transmitting the unique information specific to the RFID tag 8 back to the RFID reader device 14 via the signal 42. As stated above, the unique information can be pre-programmed to the RFID tags 8 and can include a variety of information, such as the specific location of the RFID tag 8 within the area 12. In the alternative, the unique information can include an identification of the RFID tag, such as "RFID tag # 135", or the like, that is associated with the specific location of the RFID tag 8 within the area 12.

The RF receiver 28 of the RFID reader device 14 can receive the response signal(s) 42 from the RFID tags 8. The unique information from the response signal(s) 42 can pass from the RF receiver 28 to the computer system 30 of the RFID reader device 14. The computer system 30 can analyze and compare a variety of features of the response signals 42 to determine the current location of the RFID reader device 14. For instance, the computer system 30 can analyze the time of response from the RFID tags 8. Specifically, the time of response can be analyzed by the computer system 30 tracking the time between sending the signal 40 from the RF transmitter 26 and receiving a signal 42 in the RF receiver 28 from the RFID tags 8. A longer time between the sending and receiving can indicate that an RFID tag 8 is farther away in proximity than an RFID tag 8 with a shorter time between the sending and receiving. The computer system 30 can analyze and compare each of the response signals 42 received by the RF receiver 28.

The computer system 30 can further analyze the strength of the response signal 42 from the RFID tags 8 to determine the current location of the RFID reader device 14. Specifically, the strength of the response signal 42 can be analyzed by the computer system 30 tracking the strength of the response signals 42 from the RFID tags 8. A response signal 42 from an RFID tag 8 that has a stronger signal will be closer in proximity to the RFID reader device 14 than a response signal 42 from an RFID tag 8 that has a weaker signal. Any signals that reflect off of walls, structures, or the like may have a weaker signal and/or will come in phase shifted. The computer system 30 can determine whether a response signal 42 is an actual signal from the RFID tags 8, or is a reflection and, thus, can be overlooked. The computer system 30 can analyze and compare these features of each of the response signals 42 sent by the RFID tags 8. Based on the time of response of the response signals 42, the strength of the response signals 42, and the specific locations of the RFID tags 8, the computer system 30 can triangulate an approximate location of the RFID reader device 14 within the area 12. It is to be understood that further methods of determining the location of the RFID reader device 14 are contemplated. In one example, an angle of arrival (AoA) measurement can be used with the above described methods to determine the RFID reader device 14 location. For an AoA measurement, the computer system 30 can further analyze the time and direction of the response signal 42 on the RF receiver 28 by measuring a difference in received phase of the response signal 42 at the RF receiver 28. A delay of arrival of the response signal 42 can be measured and converted to an AoA measurement, which can then be used to determine an approximate location of the RFID reader device 14.

Referring now to FIG. 3, an example of the display screen 18 of the RFID reader device 14 is shown. Once the computer system 30 has determined the current location of the RFID reader device 14, the computer system 30 can display the current location 37 of the RFID reader device 14 and thus the location of the user. Specifically, the computer system 30 can display the user's current location 37 on the map 32 on the display screen 18. The computer system 30 will have determined the current location 37 with reference to the RFID tags 8, such as 10 feet south of a first RFID tag and 4 feet west of a second RFID tag. Accordingly, the computer system 30 can display this current location 37 on the map 32 with an identifying signal, such as an X (as shown), or the like. Furthermore, the computer system 30 can chart a path 50 from the user's current location 37 to a desired location (e.g., an exit) 36. As such, the user can look at the display screen 18 to guide the user from a current location 37 to the desired location (e.g., the exit) such as by highlighting a path. The display screen 18 can also display a distance to a next action in the form of text on the display screen 18. For instance, the display screen 18 can display the distance from the user's current location 37 to a desired location, such as by displaying the text "turn left in 20 feet", or the like.

As stated above, the map 32 is a map of the area 12 which includes paths, such as stairwells, walkways, etc., and locations, such as exits, landmarks, etc. Accordingly, the user can select the desired location 36 that he/she would like to reach, such as the exit. This could be accomplished by touching the display screen 18 if the RFID reader device 14 incorporates a touchscreen feature. In the alternative, the user could input the desired location 36 by manually selecting the location on the map 32, such as by using buttons on the RFID reader device 14, or the like. Once the desired location 36 is selected, the map 32 can display the user's current location 37 along with the path 50 from the user's current location 37 to the desired location 36, such as the exit.

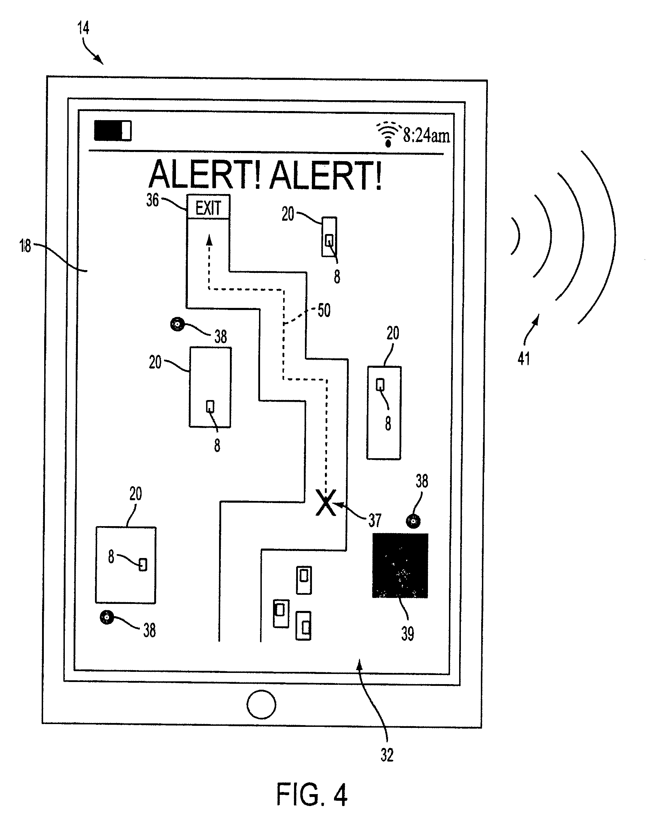

Referring now to Fig. 4, an example of the display screen 18 of the RFID reader device 14 is shown in an emergency escape mode. In this example, the RFID reader device 14 may have access to a wireless network. In this situation, sensors 38 may be provided within the area 12. The sensors 38 can be shown on the map 32, and can communicate with the RFID reader device 14 through the wireless network. The sensors 38 are generically shown, and can include a variety of danger sensing devices, such as fire alarms, smoke detectors, carbon monoxide detectors, radiation and/or temperature sensors, other types of danger detection systems, etc. The sensors 38 can determine the presence of a hazard 39, such as a fire, gas leak, etc. The sensors 38 can communicate the presence and location of the hazard 39 through the wireless network to the RFID reader device 14. As such, the computer system 30 can take into account the sensors 38 and hazard 39 when charting the path 50.

The operation of the guidance location system 10 can now be described in the emergency escape mode. In the event of a hazard 39, such as a fire, the sensors 38 can communicate with the RFID reader device 14 by alerting the RFID reader device 14 of the presence of a fire. The RFID reader device 14 can display a hazard indicator, such as a picture of a fire, on the map 32 at an approximate location of the hazard 39. It is to be understood that the hazard indicator, while shown as a picture of a fire, could include any number of warning indications, and is not limited to the shown example. The computer system 30 can chart a path to the desired location 36, such as the nearest exit, that avoids the hazard 39. Additionally, the RFID reader device 14 can audibly warn the user of the dangerous situation by issuing a voice command 41 through the speaker 34 (see FIG. 2). The voice command 41 (FIG. 4) could issue a variety of warnings, such as "Fire near the blast furnace, proceed to nearest exit." The emergency escape mode described herein can occur automatically once a dangerous situation arises. For instance, once the hazard 39 begins, the sensors 38 can immediately alert the RFID reader device 14. Accordingly, the RFID reader device 14 can instantly issue the voice command 41 and chart the path 50 to the nearest exit.

In a further example, a remote location, such as a centralized server, could also read and communicate with the sensors 38 and/or the RFID reader device 14. The sensors 38 and/or the RFID reader device 14 can communicate with the centralized server to alert the centralized server of the presence of the hazard 39 and/or the location of the RFID reader device 14. The centralized server could communicate with the RFID reader device 14 to alert the RFID reader device 14 of the presence and location of the hazard 39. The computer system 30 could chart a path to the desired location 36, such as the nearest exit, that avoids the hazard 39. In this example, the sensors can communicate with both the centralized server and RFID reader device 14. Accordingly, if wireless communication between the centralized server and the RFID reader device 14 is inoperable for some reason, the RFID reader device 14 could still communicate directly with the sensors 38. Similarly, the current location of the RFID reader device 14 can be sent to the remote location, including the centralized server, such that a 3^{rd} party can monitor and/or track the location of the RFID reader device 14 within the area 12 from the remote location.

The invention has been described with reference to the example embodiments described above. Modifications and alterations will occur to others upon a reading and understanding of this specification. Example embodiments incorporating one or more aspects of the invention are intended to include all such modifications and alterations insofar as they come within the scope of the appended claims.

## Claims

1. A location system including:
a radio frequency identification (RFID) reader device (14) configured to send at least one query signal and receive at least one response signal; and
at least one RFID tag (8) positioned within an area, the at least one RFID tag (8) storing unique information associated with a location of the at least one RFID tag within the area, each of the at least one RFID tag (8) being configured to receive the least one query signal from the RFID reader device (14) and to transmit one of the at least one response signal, conveying the unique information, to the RFID reader device (14);
the RFID reader device (14) being further configured to utilize the at least one response signal to determine a current location of the RFID reader device (14) within the area.

2. The location system of claim 1, wherein the RFID reader device (14) is configured to display a map of the area on a display screen.

3. The location system of claim 2, wherein the RFID reader device (14) is configured to chart a path on the map from the current location of the RFID reader device (14) to a desired location.

4. The location system of claim 2 or claim 3, further including one or more area sensors (38) located within the area, each of the one or more area sensors is configured to communicate with the RFID reader device (14).

5. The location system of claim 2, 3 or 4, wherein each of the one or more area sensors (38) is configured to sense at least one hazard proximate to its location and communicate information about the sensed at least one hazard to the RFID reader device (14).

6. The location system of claim 5, wherein the RFID reader device (14) is configured to chart a path on the map from the current location of the RFID reader device (14) to a desired location, with the charted path avoiding the sensed at least one hazard.

7. The location system of any one of claims 1 to 6, wherein the at least one RFID tag (8) includes a plurality of RFID tags, with each of the plurality of RFID tags being positioned at a different location within the area.

8. The location system of claim 7, wherein each of the plurality of RFID tags (8) is configured to transmit to transmit a respective one of the at least one response signal to the RFID reader device (14), with each respective response signal conveying respective unique information.

9. The location system of claim 8, wherein the RFID reader device (14) is configured to perform at least one of:
analyze features of the response signals from the plurality of RFID tags (8);
analyze the time of occurrence of each response signal;
analyze the strength of each response signal; and
compare the response signals to determine the current location of the RFID reader device (14).

10. The location system of any one of claims 1 to 9, wherein the RFID reader device (14) includes a map of an area, the RFID reader device (14) is configured to determine a current location of the RFID reader device (14) on the map, and the RFID reader device (14) is configured to display a path on the map from the current location of the RFID reader device (14) to a desired location within the area.

11. The location system of claim 10, wherein the RFID reader device (14) includes a display screen (18), and the RFID reader device (14) displays the map of the area on the display screen.

12. The location system of claim 14, wherein the RFID reader device (14) displays the current location of the RFID reader device (14) on the display screen (18).

13. The location system of any one of claims 1 to 12, wherein the RFID reader device (14) includes a speaker (34), and the RFID reader device (14) is configured to provide voice commands through the speaker (34).

14. A method of locating a user within an area, the method including:
providing a radio frequency identification (RFID) reader device (14);
positioning at least one RFID tag (8) within the area, wherein the at least one RFID tag (8) is configured to store unique information associated with a location of the at least one RFID tag (8) within the area;
sending at least one signal from the RFID reader device (14) that is received by the at least one RFID tag (8);
transmitting the stored unique information of at least one RFID tag (8) to the RFID reader device (14); and
determining a current location of the RFID reader device (14) within the area.

15. The method of claim 17, wherein the method includes displaying the current location upon a screen (18); and
wherein the method preferably further includes at least one of:
displaying a map of the area upon the screen (18), and displaying the current location and a path on the map from the current location to a desired location on the map; and
sending the current location of the RFID reader device (14) within the area to a centralized server.
